# FASCICULE DE BREVET EUROPEEN

(11) **EP 1 299 228 B1**
(45) Date de publication et mention de la délivrance du brevet: **31.01.2007**
(21) Numéro de dépôt: 01951623.6
(22) Date de dépôt: 21.06.2001
(51) Int. Cl.: B32B 37/00, B32B 27/00, B32B 1/08

(54) **OBJET IMPERMEABILISE ET RENFORCE EN MATIERE PLASTIQUE ET PROCEDE POUR SA FABRICATION**
WASSERDICHTER, VERSTÄRKTER KUNSTSTOFFGEGENSTAND UND VERFAHREN ZU DESSEN HERSTELLUNG
WATERPROOFED AND REINFORCED PLASTIC OBJECT AND METHOD FOR MAKING SAME

(30) Priorité: 22.06.2000 FR 0008110
(43) Date de publication de la demande: 09.04.2003
(73) Titulaire: egeplast Werner Strumann GmbH & Co. KG, 48268 Greven (DE)
(72) Inventeur: DEHENNAU, Claude, B-1410 Waterloo (BE); DE CANNIERE, Jean, B-1180 Bruxelles (BE)
(74) Mandataire: Fritz, Edmund Lothar
(86) Numéro de dépôt international: PCT/EP2001/007062
(87) Numéro de publication internationale: WO 2001/098072

(56) Documents cités:
- US-A- 5 019 309
- US-A- 5 882 741

## Description

La présente invention concerne un objet en matière plastique imperméabilisé et renforcé pour résister aux sollicitations diverses.

Plus particulièrement, elle concerne l'imperméabilisation d'objets en matière plastique, notamment des objets creux, vis-à-vis des gaz et des liquides aqueux ou organiques pouvant éventuellement contenir des corps dissous et son renforcement mécanique pour lui conférer des propriétés de résistance supérieures à celles que présentent naturellement les objets simplement imperméabilisés.

Diverses techniques sont connues pour conférer des propriétés barrière à des surfaces d'objets en matière plastique. Deux approches différentes ont conduit à proposer des solutions qui ont été mises en oeuvre dans les procédés de fabrication de ces objets. La première est basée sur le traitement superficiel de l'objet au moyen d'un plasma ou d'un réactif chimique tel que l'anhydride sulfurique ou le fluor gazeux susceptibles de modifier les molécules de la matière plastique situées à la surface de l'objet. Une autre approche consiste à intercaler dans l'épaisseur de la matière plastique constituant l'objet une couche comprenant une matière particulière, souvent elle-même thermoplastique, à propriété barrière vis-à-vis d'un ou de plusieurs gaz ou liquides. Dans ce dernier cas, on a fait un large usage des techniques de mise en oeuvre par coextrusion.

A titre de matériau barrière, on utilise couramment des polymères fluorés, des polyamides, des polyacrylonitriles, des polyesters ainsi que des halogénures de polyvinylidène. Un matériau couramment employé est un copolymère d'éthylène et d'alcool vinylique (EVOH). L'efficacité barrière de ces matériaux n'est cependant jamais totale pour tous les types de gaz ou de liquide avec lesquels ils sont mis en contact. C'est pourquoi on a recherché des produits barrière plus efficaces que ceux cités supra. Des polymères à cristaux liquides (LCP) ont été proposés afin de pouvoir atteindre une imperméabilité quasi totale pour une gamme étendue de gaz et de liquides.

On connaît aussi une technique de production de tubes dont la matière plastique est biorientée dans les directions parallèle et perpendiculaire à l'axe du tube, afin de lui conférer des propriétés de résistance mécanique améliorées. L'opération de biorientation ne peut cependant être effectuée que sur le tube préalablement formé par extrusion, ce qui rend le procédé discontinu et en grève le coût. Par ailleurs, le maintien de la biorientation de la matière lors de la pose de raccords nécessite l'observance de précautions particulières impliquant l'utilisation de nombreux raccords spéciaux. Par ailleurs, le renforcement obtenu selon cette technique est surtout efficace dans le sens longitudinal et ne résout que très partiellement le problème de la résistance aux efforts radiaux qui représentent les contraintes maximales dans certaines applications, par exemple le transport de fluides sous pression. Jusqu'à présent, les tentatives effectuées pour rendre le procédé de biorientation continu n'ont pas encore porté pleinement leurs fruits, en raison des contraintes technologiques et du surcoût important qu'elles induisent, en regard du gain de résistance encore insuffisant que l'on obtient. Un tel procédé complexe est par exemple décrit dans le brevet US 5,882,741. ,

Une autre solution de renforcement a été de placer des renforts sur des tubes en matière plastique, comme par exemple un enroulement, en continu, de fibres (en verre, par exemple) imprégnées par une résine thermoplastique ou thermodurcissable (« COFITS »). Toutefois, cette solution n'est pas non plus sans défauts, car ces enroulements sont généralement fragiles et augmentent fortement la densité du tube renforcé résultant ainsi que son coût, notamment de production. Par ailleurs, l'efficacité de ces renforcements ne demeure pas toujours stable au cours du temps et le recyclage des cassés de fabrication du tube et du tube en fin de vie est souvent difficile en raison de l'imbrication dans le polymère du tube de matières étrangères délicates à séparer.

Dans la demande internationale de brevet WO 99/57474 on décrit un tube composite pour le transport d'eau chaude et froide comprenant un tube de base en polyéthylène réticulé et une couche barrière en LCP. Une variante de ce tube comprend en outre une couche externe jouant le rôle à la fois de protection mécanique et de barrière contre la diffusion d'oxygène.

Enfin, le brevet US 5,019,309 décrit un tube en matière thermoplastique recouvert d'une couche de LCP sous forme de filaments enroulés, et non pas d'un film continu.

De telles structures restent cependant relativement fragiles et résistent en outre mal au fluage sous contrainte prolongée.

L'invention a pour but de pallier ces inconvénients et de fournir un objet en matière plastique qui comprend un film mince de LCP et qui résiste bien aux sollicitations mécaniques provenant de l'environnement dans lequel il est placé, sans perte notable de sa résistance pendant sa durée de vie.

A cet effet, l'invention concerne un objet en matière plastique, imperméabilisé et renforcé, caractérisé en ce qu'il comprend une structure de base, une couche mince d'imperméabilisation à base de polymère à cristaux liquides (LCP) sous forme de bandes enroulées par-dessus sa surface externe et une autre couche extérieure de renforcement comprenant au moins un polymère orienté.

L'invention s'adresse à des objets en matière plastique, c'est-à-dire des solides dans les conditions ambiantes comprenant au moins une matière polymérique, en particulier un polymère thermoplastique. Ces objets peuvent se présenter sous toutes formes et dimensions.

En particulier, l'invention s'adresse à des corps creux, c'est-à-dire des objets qui présentent au moins une surface concave, délimitant un volume fermé ou non. Des exemples de tels corps creux sont les flacons et les réservoirs destinés à contenir un gaz et/ou un liquide.

D'autres types de corps creux auxquels s'adresse avantageusement l'invention sont les tuyaux et les tubes, tels que, par exemple, les canalisations d'adduction d'eau, les tubes utilisés dans les applications du génie chimique, les tuyaux en matière plastique à usage médical et les conduites d'alimentation en air ou en carburant des moteurs de véhicules automobiles.

L'invention convient particulièrement bien dans le cas de tubes de grand diamètre (d'au moins 30 mm, de préférence, d'au moins 100 mm et particulièrement préféré d'au moins 200 mm), tels que, par exemple, les tubes de transport d'eau potable.

Par matière plastique on entend désigner toute matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative: les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits *supra.*

Les polyhalogénures de vinyle et les polyoléfines sont généralement préférés.

Un polymère souvent employé est le polyéthylène. D'excellents résultats ont été obtenus avec du polyéthylène haute densité (PEHD).

L'objet selon l'invention est imperméabilisé, c'est-à-dire capable de pouvoir retenir certaines matières en contact avec sa surface et bloquer la migration de ces matières au travers de sa masse. En l'occurrence, les objets selon l'invention sont imperméables aux gaz et aux liquides aqueux ou organiques susceptibles d'entrer en contact avec eux. Parmi les gaz couramment rencontrés on peut citer, l'air, l'oxygène et l'anhydride carbonique. Parmi les liquides, comprenant éventuellement un soluté inorganique ou organique, on rencontre l'eau, les alcools aliphatiques et alicycliques, les hydrocarbures et, en particulier, les essences carburants pour moteurs à combustion interne et le gasoil pour moteurs Diesel. L'objet imperméabilisé est aussi susceptible d'entrer en contact avec plusieurs liquides et/ou gaz différents en mélange.

Selon l'invention, l'objet comprend une structure de base, c'est-à-dire une structure comprenant une composition de matière de base polymérique. La composition de matière de base est une composition polymérique qui représente au moins 60 % en poids du poids total de l'objet renforcé.

Par objet renforcé, on entend désigner un objet dont les propriétés mécaniques intrinsèques de la structure de base qui le constitue sont modifiées par la présence d'une couche de matière additionnelle distincte de la structure de base et qui apporte par sa présence un supplément de résistance mécanique.

Par polymère à cristaux liquides (Liquid Crystal Polymer ou « LCP »), on entend désigner un polymère dont les molécules se présentent dans un état fluide et ordonné dans une gamme de températures intermédiaires entre celles qui correspondent à l'état solide et celles correspondant à l'état fondu complètement désordonné (polymère thermotropique) ou encore un polymère susceptible de se présenter à l'état ordonné en solution (polymère lyotropique). Les LCP présentent généralement des propriétés d'anisotropie et/ou de biréfringence à l'état fondu.

De préférence, le LCP utilisé dans le procédé selon l'invention appartient à la classe des polymères thermotropiques. De tels polymères comprennent généralement des chaînes allongées où alternent des unités rigides et des unités flexibles.

Comme exemples de polymères LCP thermotropiques, on peut citer : les copolyesters de l'acide p-hydroxybenzoïque et de l'acide 6-hydroxy-2-naphtoïque et les copolyesters de l'acide p-hydroxybenzoïque avec l'acide téréphtalique et le 4,4'-biphénol.

Des exemples de tels polymères sont donnés dans l'ouvrage « Encyclopedia of Polymer Science and Engineering, édité par John Wiley & Sons, New-York, 1987 Vol. 9, pages 1 à 61 et en particulier les polyesters des tableaux 12 (pages 50 et 51) et 13 (page 52).

Par couche mince à base de LCP, on désigne un film comprenant un LCP, dont la largeur ne dépasse pas 0,5 m et l'épaisseur n'excède pas 0,25 mm et, de préférence, n'excède pas 0,1 mm. Tout particulièrement préférés sont les films d'au moins 0,01 mm d'épaisseur et, mieux encore, 0,005 mm.

Dans ces bandes le LCP peut être le seul constituant. Ces bandes peuvent aussi être constituées d'un mélange d'au moins deux LCP différents. Alternativement, les bandes peuvent encore être constituées d'un alliage de LCP avec d'autres polymères dans lequel le LCP forme la phase continue.

Selon l'invention, la couche mince à base de LCP est constituée de bandes comprenant ce LCP enroulées autour de l'objet imperméabilisé.

Ces bandes peuvent, par exemple, être enroulées autour de l'objet en une seule épaisseur de bandes qui se recouvrent partiellement sur au plus 10 % de leur surface. Elles peuvent encore, de manière alternative et préférée, ne pas se recouvrir et être disposées plutôt à spires jointives autour de l'objet imperméabilisé, c'est-à-dire de manière telle que les spires successives soient déposées contre la spire précédente, sans la recouvrir.

Lorsque l'objet imperméabilisé présente une symétrie de révolution, les bandes de LCP peuvent avantageusement être enroulées selon une direction qui fait un angle aigu avec la direction de l'axe de révolution de l'objet. Cet angle peut être imposé de telle sorte par exemple que, compte tenu de la largeur de la bande de LCP, deux spires adjacentes soient toujours jointives. Cet angle est choisi ne dépassant pas 90 degrés. De préférence, il ne dépasse pas 75 degrés. De manière la plus préférée, cet angle ne dépasse pas 60 degrés. Il convient que cet angle ne soit par ailleurs pas inférieur à 0 degré et, de préférence, pas inférieur à 10 degrés. De manière la plus préférée, cet angle n'est pas inférieur à 20 degrés.

Avantageusement, l'objet imperméabilisé selon l'invention comprend au moins une épaisseur de bandes enroulées.

Il peut être intéressant, dans certains cas, que deux épaisseurs adjacentes quelconques de bandes présentent un angle égal et de signe opposé par rapport à une direction perpendiculaire à la direction de l'axe de symétrie de révolution de l'objet imperméabilisé.

Selon l'invention, la couche mince à base de LCP est enroulée par-dessus la surface externe de l'objet imperméabilisé. On entend par là que, dans le cas des objets creux, la couche mince est enroulée du côté convexe de l'objet. Dans le cas d'un objet plein, elle est enroulée à la périphérie de l'objet, sur la surface qui le sépare du monde extérieur.

Selon l'invention, l'objet imperméabilisé et renforcé comprend aussi une autre couche extérieure de renforcement.

Cette autre couche de renforcement est située au-dessus de la couche mince à base de LCP. Elle a pour fonction d'apporter un supplément de résistance mécanique à l'objet imperméabilisé et renforcé.

Selon l'invention, la couche de renforcement comprend au moins un polymère orienté. Elle peut comprendre un seul polymère orienté. Alternativement, elle peut aussi comprendre un mélange de plusieurs polymères et éventuellement d'additifs non polymériques dont au moins un des polymères est orienté. Le polymère peut être tout polymère thermoplastique susceptible de pouvoir être présent dans la couche de renforcement sous forme orientée, c'est-à-dire ayant au moins 20 % en poids des chaînes moléculaires qui le composent disposées selon au moins une même direction. On peut choisir pour polymère orienté tout type de polymère thermoplastique qui se prête bien à l'orientation de ses chaînes de molécules. Si plusieurs polymères orientés sont présents, ils peuvent partager la même direction d'orientation. Alternativement, ils peuvent être orientés selon plusieurs directions différentes. De préférence, lorsque l'objet possède une forme allongée dans une direction particulière, au moins un des polymères orienté l'est dans une direction comprise entre +20 degrés et -20 degrés d'une direction perpendiculaire à cette direction particulière.

Le polymère orienté des bandes peut être de même nature qu'un des polymères compris dans l'objet, notamment dans la structure de base de celui-ci. Il peut aussi, au contraire, être un polymère non présent dans cet objet, si les circonstances d'utilisation l'exigent ou sont peu compatibles avec l'emploi d'un polymère identique.

Dans l'objet imperméabilisé et renforcé selon l'invention, les bandes formant la couche mince à base de LCP présentent avantageusement aussi une structure moléculaire orientée.

Cette structure peut être mono-orientée, c'est-à-dire orientée dans une seule direction. Dans ce cas, la direction d'orientation est généralement celle de la longueur de la bande enroulée formant la couche mince.

Alternativement, la structure des bandes formant cette couche mince peut aussi être multi-orientée, c'est-à-dire orientée dans au moins deux directions. Une telle structure existe par exemple dans les bandes à base de LCP qui ont été fabriquées par extrusion au travers d'une filière contra-rotative par rapport au sens de rotation de la vis d'extrusion.

Selon une forme de réalisation particulière de l'objet conforme à l'invention, au moins une couche adhésive est intercalée entre deux couches adjacentes quelconques de la structure.

Par couche adhésive, on entend désigner toute couche comprenant un adhésif compatible avec les constituants d'au moins une des couches adjacentes. L'adhésif le plus employé est généralement un adhésif polymère se présentant sous la forme d'une polyoléfine fonctionnalisée. Par polyoléfine fonctionnalisée, on entend désigner toute polyoléfine comprenant, outre des unités dérivées d'oléfines, des unités monomériques fonctionnelles. Celles-ci peuvent être incorporées soit dans la chaîne principale de la polyoléfine, soit dans ses chaînes latérales. Elles peuvent également être incorporées directement dans le squelette de ces chaînes principales et latérales, par exemple par copolymérisation d'un ou de plusieurs monomères fonctionnels avec le ou les monomères oléfiniques ou encore résulter du greffage d'un ou de plusieurs monomères fonctionnels sur lesdites chaînes, ultérieurement à la fabrication de la polyoléfine. Plusieurs polyoléfines fonctionnalisées peuvent aussi être utilisées en mélange.

On choisit les unités monomériques fonctionnelles de la polyoléfine fonctionnalisée parmi les acides carboxyliques, les diacides carboxyliques, les anhydrides correspondant à ces diacides et les groupes époxy. Ces unités monomériques proviennent généralement de la copolymérisation ou du greffage d'au moins un monomère insaturé possédant les mêmes fonctions. Des exemples de monomères utilisables sont, non limitativement, l'acide acrylique, l'acide méthacrylique, l'acide maléique, l'acide fumarique, l'acide itaconique, l'anhydride maléique, l'anhydride fumarique, l'anhydride itaconique, les éthers et les esters vinyliques. De préférence, les unités monomériques fonctionnelles proviennent de la copolymérisation ou du greffage d'anhydride maléique.

D'autres adhésifs intéressants qui peuvent aussi être employés sont les copolymères à base d'éthylène (« E ») et de méthacrylate de glycidile (« GMA ») et les terpolymères-E/MA/GMA, E/BA/GMA et E/VAC/GMA dans lesquels MA et BA symbolisent, respectivement, les acrylates de méthyle et de butyle et VAC l'acétate de vinyle.

L'invention est bien adaptée à un objet présentant une structure de base en forme de tube creux en matière plastique obtenu par extrusion.

L'extrusion se fait dans une machine à vis qui mélange et force la matière plastique fondue au travers d'une filière.

Selon une autre forme de réalisation de l'objet selon l'invention, la couche de renforcement est choisie parmi une couche formée de bandes de polymère orienté et une couche continue de polymère orienté. Dans le premier cas, les bandes sont enroulées autour de l'objet imperméabilisé, de la même manière que les bandes composant la couche à base de LCP décrites ci-dessus.

Selon une dernière forme de réalisation préférée de l'objet selon l'invention, il comprend en outre une couche extérieure supplémentaire de finition comprenant elle-même un polymère de même nature que celui de la structure de base. Ce polymère est souvent choisi parmi les polyhalogénures de vinyle et les polyoléfines. La couche de finition remplit notamment les buts de protéger les couches sous-jacentes et de régler de manière précise la forme extérieure de l'objet.

Parfois, elle permet aussi la pose et l'accrochage plus facile de raccords, dans le cas où l'on désire assembler un certain nombre d'objets. Cette dernière fonction est particulièrement utile lorsque l'objet est un tube.

L'épaisseur d'une couche de finition externe est le plus souvent d'au moins 0,5 mm. Elle ne dépasse généralement pas 2 mm.

Un exemple de structure préférée est le suivant :
A/B/C/D/E/F
dans laquelle,
- A est un polymère thermoplastique extrudé, par exemple du polyéthylène haute densité (« PEHD »),
- B est une couche adhésive,
- C est une couche mince d'imperméabilisation à base de LCP sous forme de bandes enroulées à spires jointives,
- D est une autre couche adhésive,
- E est une couche de renforcement sous forme de bandes de matière thermoplastique orientée,
- F est une couche extérieure de finition en matière thermoplastique.

Une structure alternative consiste à intercaler dans la structure précédente une couche supplémentaire de protection faisant office d'écran thermique entre les couches E et F. Cette alternative évite les faibles taux d'orientation de la couche de renforcement qui peuvent survenir lors de la pose de la couche de finition, par relaxation sous l'effet de la chaleur des orientations moléculaires de la couche de renforcement.

L'invention concerne aussi un procédé pour la fabrication d'un tube imperméable et renforcé, caractérisé en ce qu'il comprend au moins les étapes suivantes, dans l'ordre indiqué:
- extrusion d'un tube en matière thermoplastique,
- enroulement sur le tube d'au moins une couche de bande mince comprenant un LCP, en guise de couche d'imperméabilisation,
- dépôt d'une couche extérieure de renforcement.

Les définitions des termes employés ici pour le procédé sont *mutatis mutandis* les mêmes que celles déjà exposées plus haut à propos de l'objet.

Lorsque la structure de la couche de renforcement est multi-orientée, elle convient mieux pour une mise en oeuvre par la technique de co-extrusion.

Selon l'invention, le dépôt de la couche extérieure de renforcement est effectué selon la méthode de coextrusion d'une couche de polymère orienté, pendant l'extrusion du tube en matière thermoplastique.

Alternativement, ce dépôt peut aussi s'effectuer par enroulement d'au moins deux couches croisées de bandes de polymère orienté.

Selon une forme de réalisation particulière du procédé selon l'invention, on enduit au moins les bandes de la couche d'imperméabilisation ou la couche de renforcement au moyen d'une composition adhésive avant leur mise en oeuvre sur le tube.

Un procédé alternatif consiste à enduire la structure de base d'une composition adhésive. On peut aussi combiner l'enduction d'au moins une couche d'imperméabilisation ou de renforcement au moyen d'une composition adhésive avec l'enduction de la structure de base. Si la structure de base et/ou plusieurs couches sont enduites, la composition adhésive utilisée peut être différente pour la structure de base et/ou chacune des couches. Alternativement, la composition adhésive peut aussi être semblable pour la structure de base et/ou pour toutes les autres couches, lorsque sa compatibilité avec chacune de celles-ci ne pose pas de problème.

Selon une autre forme de réalisation particulière conforme à l'invention, on recouvre le tube.muni de sa couche de renforcement d'une couche supplémentaire extérieure de finition comprenant un polymère choisi parmi les polyhalogénures de vinyle et les polyoléfines.

La nature des adhésifs employés et la définition de la couche extérieure de finition sont semblables à celles déjà décrites *supra* à propos de l'objet.

## Revendications

1. - Objet en matière plastique, imperméabilisé et renforcé, **caractérisé en ce qu'**il comprend une structure de base, une couche mince consistant en un film d'imperméabilisation comprenant un polymère à cristaux liquides (LCP) dont la largeur ne dépasse pas 0,5 m et l'épaisseur n'excède pas 0,25 mm, sous forme de bandes enroulées par-dessus sa surface externe et une couche extérieure de renforcement comprenant au moins un polymère orienté.

2. - Objet selon la revendication précédente, **caractérisé en ce que** la couche mince à base de LCP présente une structure moléculaire choisie parmi les structures mono- et multi-orientées.

3. - Objet selon une quelconque des revendications précédentes, **caractérisé en ce qu'**au moins une couche adhésive est intercalée entre deux couches adjacentes quelconques de la structure.

4. - Objet selon une quelconque des revendications précédentes, **caractérisé en ce que** la structure de base est un tube creux en matière plastique obtenu par extrusion.

5. - Objet selon une quelconque des revendications précédentes, **caractérisé en ce que** la couche de renforcement est choisie parmi une couché formée de bandes de polymère orienté et une couche continue de polymère orienté.

6. - Objet selon une quelconque des revendications précédentes, **caractérisé en ce qu'**il comprend en outre une couche extérieure supplémentaire de finition qui comprend un polymère de même nature que celui de la structure de base.

7. - Procédé pour la fabrication d'un tube imperméable et renforcé mécaniques, **caractérisé en ce qu'**il comprend au moins les étapes suivantes, dans l'ordre indiqué :
• extrusion d'un tube en matière thermoplastique,
• enroulement sur le tube d'au moins une couche mince consistant en un film comprenant un polymère à cristaux liquides (LCP) dont la largeur ne dépasse pas 0,5 m et l'épaisseur n'excède pas 0,25 mm, en guise de couche d'imperméabilisation,
• dépôt d'une couche extérieure de renforcement.

8. - Procédé selon la revendication 7, **caractérisé en ce que** le dépôt de la couche de renforcement est effectué selon la méthode de coextrusion d'une couche de polymère orienté ou par enroulement d'au moins deux couches croisées de bandes de polymère orienté.

9. - Procédé selon une des revendications 7 ou 8, **caractérisé en ce qu'**on enduit au moins la structure de base et/ou les bandes de la couche d'imperméabilisation ou la couche de renforcement au moyen d'une composition adhésive avant leur mise en oeuvre.

10. - Procédé selon une quelconque des revendications 7 à 9, **caractérisé en ce que** l'on recouvre le tube muni de sa couche d'imperméabilisation et de sa couche de renforcement d'une couche supplémentaire extérieure de finition comprenant un polymère choisi parmi les polyhalogénures de vinyle et les polyoléfines.

## Claims

1. Plastic object, reinforced and made impermeable, **characterized in that** it comprises a base structure, a thin layer consisting of an impermeabilization film comprising a liquid-crystal polymer (LCP) and having a width not exceeding 0.5 m and a thickness not exceeding 0.25 mm, in the form of tapes wound on top of its external surface, and another outer layer for reinforcement, comprising at least one oriented polymer.

2. Object according to the preceding claim, **characterized in that** the thin LCP-based layer has a molecular structure chosen from uniaxially and multiaxially oriented structures.

3. Object according to either of the preceding claims, **characterized in that** at least one adhesive layer is inserted between any two adjacent layers of the structure.

4. Object according to any one of the preceding claims, **characterized in that** the base structure is a hollow plastic pipe obtained by extrusion.

5. Object according to any one of the preceding claims, **characterized in that** the reinforcement layer is chosen from a layer formed from tapes of oriented polymer and a continuous layer of oriented polymer.

6. Object according to any one of the preceding claims, **characterized in that** it furthermore includes an additional outer layer for finishing, which comprises a polymer of the same kind as that of the base structure.

7. Process for manufacturing an impermeable and mechanically reinforced pipe, **characterized in that** it comprises at least the following steps, in the order indicated:
• extrusion of a thermoplastic pipe;
• winding onto the pipe of at least one thin layer consisting of a film comprising a liquid-crystal polymer (LCP) and having a width not exceeding 0.5 m and a thickness not exceeding 0.25 mm as impermeabilization layer; and
• deposition of an outer reinforcement layer.

8. Process according to Claim 7, **characterized in that** the deposition of the reinforcement layer is carried out using the method of coextruding an oriented polymer layer or by winding at least two crossed layers of oriented polymer tapes.

9. Process according to either of Claims 7 and 8, **characterized in that** at least the base structure and/or the tapes of the impermeabilization layer or the reinforcement layer are coated by means of an adhesive composition before they are used.

10. Process according to any one of Claims 7 to 9, **characterized in that** the pipe provided with its impermeabilization layer and its reinforcement layer is covered with an additional outer finishing layer comprising a polymer chosen from polyvinyl halides and polyolefins.

## Patentansprüche

1. Undurchlässig gemachter und verstärkter Kunststoffgegenstand, **dadurch gekennzeichnet, dass** er eine Grundstruktur, eine dünne, aus einem Impermeabilisierungsfilm bestehende, eine Flüssigkristallpolymer umfassende Schicht, deren Breite 0,5 m nicht übersteigt und deren Dicke 0,25 mm nicht überschreitet, in Form von über die Außenoberfläche der Grundstruktur aufgewickelten Bahnen und eine äußere Verstärkungsschicht umfaßt, die wenigstens ein orientiertes Polymer umfaßt.

2. Gegenstand nach dem vorstehenden Anspruch, **dadurch gekennzeichnet, dass** die dünne Schicht auf Flüssigkristallbasis eine unter den monoorientierten und multiorientierten Strukturen ausgewählte Molekularstruktur aufweist.

3. Gegenstand nach einem der vorstehenden Ansprüche, **dadurch gekennzeichnet, dass** zwischen zwei benachbarten beliebigen Schichten der Struktur wenigstens eine Klebeschicht angeordnet ist.

4. Gegenstand nach einem der vorstehenden Ansprüche, **dadurch gekennzeichnet, dass** die Grundstruktur ein durch Extrusion erhaltenes Hohlrohr aus Kunststoffmaterial ist.

5. Gegenstand nach einem der vorstehenden Ansprüche, **dadurch gekennzeichnet, dass** die Verstärkungsschicht unter einer aus Bahnen von orientiertem Polymer gebildeten Schicht und einer kontinuierlichen Schicht aus orientiertem Polymer ausgewählt ist.

6. Gegenstand nach einem der vorstehenden Ansprüche, **dadurch gekennzeichnet, dass** sie zusätzlich eine weitere äußere Finishschicht umfaßt, die ein Polymer von der gleichen Art wie derjenigen der Grundstruktur aufweist.

7. Verfahren zur Herstellung eines undurchlässigen und mechanisch verstärkten Rohres, **dadurch gekennzeichnet, dass** es wenigstens die nachfolgenden Schritte, in der angegebenen Reihenfolge, umfaßt:
• Extrudieren eines Rohres aus thermoplastischem Material,
• Aufwickeln wenigstens einer dünnen, aus einem ein Flüssigkristallpolymer umfassenden Film bestehenden Schicht, deren Breite 0,5 mm nicht übersteigt und deren Dicke 0,25 mm nicht überschreitet, als Impermeabilisierungsschicht,
• Aufbringen einer äußeren Verstärkungsschicht.

8. Verfahren nach Anspruch 7, **dadurch gekennzeichnet, dass** das Aufbringen der Verstärkungsschicht nach der Methode der Coextrusion einer Schicht aus orientiertem Polymer oder durch Aufwickeln von wenigstens zwei gekreuzten Lagen aus Bahnen aus orientiertem Polymer vorgenommen wird.

9. Verfahren nach einem der Ansprüche 7 oder 8, **dadurch gekennzeichnet, dass** wenigstens die Grundstruktur und/oder die Bahnen der Impermeabilisierungsschicht oder die Verstärkungsschicht mit einer Klebezusammensetzung vor deren Anwendung überzogen werden.

10. Verfahren nach einem der Ansprüche 7 bis 9, **dadurch gekennzeichnet, dass** das mit seiner Impermeabilisierungsschicht und seiner Verstärkungsschicht ausgerüstete Rohr mit einer zusätzlichen äußeren Finishschicht überzogen wird, die ein unter den Polyvinylhalogeniden und den Polyolefinen ausgewähltes Polymer umfaßt.
